# DEMANDE DE BREVET EUROPEEN

(11) **EP 0 546 890 A1**
(43) Date de publication de la demande: **16.06.1993**
(21) Numéro de dépôt: 92403242.8
(22) Date de dépôt: 01.12.1992
(51) Int. Cl.: H01G 4/00

(54) **Condensateur à film diélectrique métallisé, et procédé de réalisation d'un tel condensateur**

(30) Priorité: 10.12.1991 FR 9115273
(71) Demandeur: COMPAGNIE EUROPEENNE DE COMPOSANTS ELECTRONIQUES LCC, F-92400 Courbevoie (FR)
(72) Inventeur: Pageaud, Michel, Thomson-CSF, SCPI,, F-92402 Courbevoie Cedex (FR); Feral, Thierry, Thomson-CSF, SCPI,, F-92402 Courbevoie Cedex (FR)
(74) Mandataire: Guérin, Michel

(57) **Abrégé**

La présente invention concerne un condensateur de type empilé ou bobiné réalisé par superposition d'au moins une paire de films (1,2) diélectriques métallisés présentant chacune une marge latérale (12,22) non métallisée de manière à former des couches.

Le condensateur comporte des couches actives (n-2,n-3) capacitivement lorsque les marges (12,22) des deux films de la paire sont sur des côtés opposés et des couches (n, n-1) inactives capacitivement lorsque les marges des deux films de la paire sont du même côté.

Application notamment aux condensateurs nus sans boîtier.

## Description

La présente invention concerne les condensateurs à film diélectrique du type empilé ou bobiné et un procédé de réalisation de ces condensateurs.

La fabrication de condensateurs de type empilé ou bobiné à partir de films plastiques métallisés est connue. On utilise généralement des films plastiques comportant une zone métallisée et une marge latérale non métallisée. On superpose deux films, leurs marges latérales non métallisées étant sur des côtés opposés afin d'obtenir une paire de films constituée d'un film de rang impair et d'un film de rang pair. Dans le cas des condensateurs de type empilé, on enroule sur une roue de grand diamètre, au moins une paire de films métallisés suivant un nombre de tours déterminé. On obtient ainsi un ruban capacitif comportant des couches de rang pair et impair alternées, appelé condensateur-mère. Dans le cas des condensateurs de type bobiné, on enroule au moins une paire de films métallisés sur un mandrin ou similaire. On obtient un condensateur individuel. On recouvre ensuite avec un métal (ou alliage) chacun des flancs du ruban capacitif ou du condensateur individuel afin de réaliser des armatures de sortie. Chaque armature de sortie permet de relier mécaniquement et électriquement entre elles les métallisations des couches de même rang. Cette opération réalisée par projection de métal en fusion, est connue sous la dénomination de schoopage. Dans le cas des condensateurs de type empilé, les rubans capacitifs sont découpés en blocs unitaires. Pour améliorer les résultats de l'opération de schoopage on peut décaler les films impairs par rapport aux films pairs pendant l'opération de bobinage. Le décalage est appelé débord.

On peut être amené notamment lorsque les condensateurs vont être utilisés "nus", sans être encapsulés, à les protéger avec des tours de finition inactifs sans effet capacitif.

Plusieurs techniques sont de nos jours employées. On peut démétalliser localement les deux films de la paire pendant l'opération de bobinage. Cette démétallisation se fait par des moyens connus tels que l'utilisation d'un arc électrique ou d'un faisceau laser. Le système utilisant un arc électrique s'encrasse rapidement. Le film risque de s'échauffer. Le système utilisant un laser est relativement coûteux, sa maintenance aussi.

On connaît aussi une technique qui consiste à insérer, pendant le bobinage, des couches de films non métallisés et donc non actifs. Cette technique nécessite le stoppage du bobinage, la coupure d'un des films métallisés, l'introduction d'un film non métallisé la reprise du bobinage, puis de nouveau le stoppage du bobinage pour réintroduire le film métallisé.

Il est bien évident que cette technique n'est pas compatible avec des productions à haute cadence puisqu'elle nécessite des arrêts de la machine et des manipulations fréquentes. Le rendement est faible et la fabrication est lente et coûteuse en main d'oeuvre.

La présente invention propose un procédé de fabrication de condensateurs de type bobiné ou empilé, par bobinage d'au moins une paire de films diélectriques métallisés, avec des couches actives et des couches inactives sans avoir à stopper la machine de bobinage et sans avoir à couper les films métallisés. Ce procédé est particulièrement simple et peu onéreux.

Les couches inactives sont obtenues par vrillage sur lui-même, à 180°, de l'un des films métallisés de la paire pendant le bobinage.

La présente invention propose un condensateur de type empilé ou bobiné, réalisé par superposition d'au moins une paire de films dielectriques métallisés, présentant sur une seule de leurs faces une zone métallisé et une marge latérale non métallisée, de manière à former des couches. Ce condensateur possède des couches actives capacitivement et des couches inactives capacitivement. Au niveau des couches actives les marges des deux films de la paire sont sur des côtés opposés. Au niveau des couches inactives, les marges des deux films de la paire sont du même côté.

Selon une caractéristique de l'invention, les couches inactives sont des couches terminales du condensateur.

Un procédé de réalisation de tels condensateurs consiste à bobiner au moins une paire de films diélectriques superposés, positionnés de manière à ce que leurs marges soient sur des côtés opposés pour réaliser les couches actives capacitivement puis à vriller l'un des films, sur lui-même, à 180 °, pour réaliser les couches inactives capacitivement. De préférence, lorsque le film est issu d'une galette et est guidé par un galet, le vrillage est réalisé en amont du galet pour provoquer une vrille entre le galet et la galette.

La distance séparant l'axe de rotation de la galette de celui du galet est suffisament petite pour que la vrille suive le chemin du film, en aval du galet.

Le vrillage peut être obtenu en basculant la galette, à 180°, de manière à inverser son sens de rotation.

L'invention sera mieux comprise et d'autres avantages apparaîtront grâce à la description suivante, donnée à titre d'exemples non limitatifs, illustrée par les dessins annexés qui représentent :
- la figure 1a : la disposition d'une paire de films métallisés lors de l'opération de bobinage de condensateurs empilés classiques;
- la figure 1b : une coupe partielle d'un condensateur de type empilé classique sans couches inactives ;
- la figure 2a : une coupe partielle d'un condensateur de type empilé selon l'invention;
- la figure 2b : la disposition d'une paire de films métallisés dont l'un d'entre eux est vrillé, lors de l'opération de bobinage de condensateur de type empilé selon l'invention;
- la figure 3a : une vue schématique partielle d'une machine de bobinage réalisant des condensateurs selon l'invention avant le village;
- la figure 3b : une vue schématique partielle d'une machine de bobinage réalisant des condensateurs selon l'invention, après le vrillage.

L'invention va être décrite pour des condensateurs de type empilé. Elle peut aussi s'appliquer à des condensateurs de type bobiné. Dans ce cas, on bobine sur un mandrin au lieu de bobiner sur une roue de grand diamètre. On obtient directement un condensateur individuel.

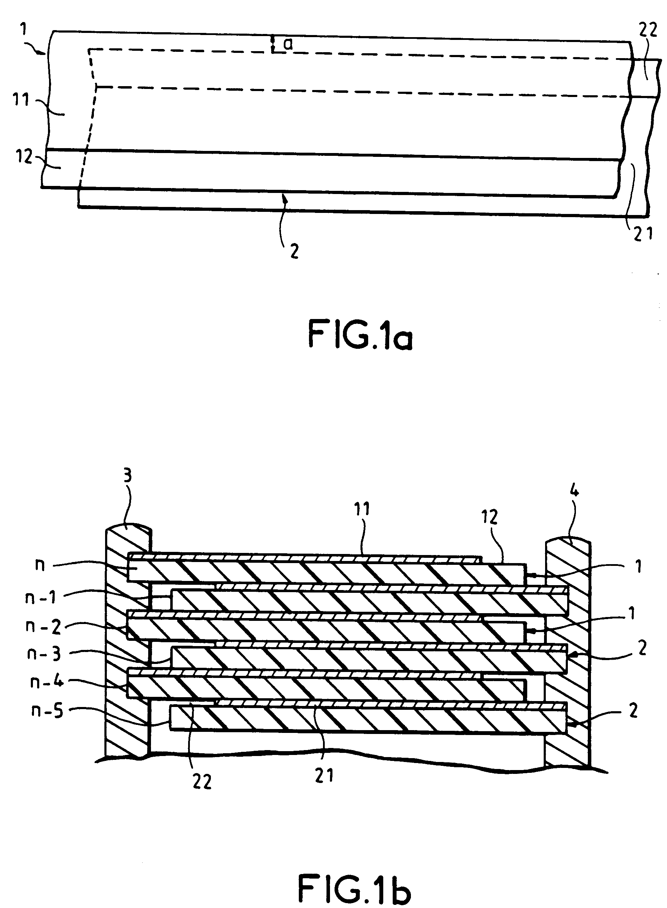

La figure 1a représente en plan de dessus le positionnement d'un film 1 de rang impair et d'un film 2 de rang pair pendant leur enroulement sur une roue de grand diamètre (non représentée). Chaque film 1,2 comporte sur une de ses faces une zone métallisée 11,21 et une marge latérale 12,22 non métallisée. Les deux marges latérales 12,22 sont situées sur des côtés opposés lorsque les deux films sont enroulés. Les films sont généralement en matière plastique : polyester, polycarbonate etc... On constate également que les deux films sont décalés; on a prévu un débord a dans l'enroulement.

La figure 1b représente, en coupe partielle, un condensateur de type empilé classique. L'empilement est constitué de couches de films 1 de rang impair et de films 2 de rang pair alternées.

Les couches portent respectivement les références n,n-1, n-2, n-3, n-4, n-5. On suppose que l'empilement représente les couches supérieures du condensateur terminé. Par métallisation ou shoopage des flancs de l'empilement on a réalisé des armatures 3,4 de sortie. Chaque armature 3,4 permet de relier mécaniquement et électriquement entre elles les métallisations 11,21 des couches de même rang. Toutes les couches sont actives capacitivement sur cette figure.

Le débord a consécutif au bobinage améliore le contact électrique entre les métallisations 11,21 et les armatures 3,4.

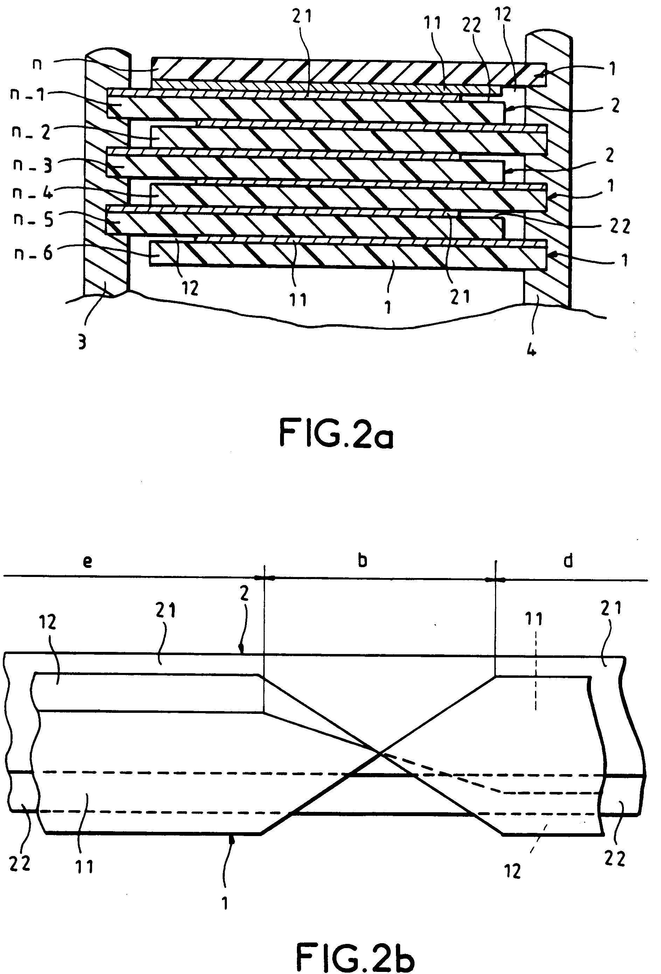

La figure 2a illustre une coupe partielle d'un condensateur de type empilé selon l'invention. L'empilement représente aussi les couches supérieures du condensateur terminé. Cet empilement comporte deux couches terminales n et n-1 inactives, sans effet capacitif. Les autres couches n-2 à n-6 sont actives capacitivement. Les deux couches terminales n, n-1 inactives ont été obtenues par vrillage sur lui-même à 180° de l'un des films, ici le film 1 de la paire. Les deux métallisations 21 et 22 sont alors en contact, les marges 12,22 sont du même côté, les deux films 1,2 sont portés au même potentiel. Il est bien entendu que le condensateur, une fois terminé, présentera une structure telle que représentée sur la figure 2a sur ses faces terminales inférieures et supérieures. En bobinant sur la roue de grand diamètre quelques tours inactifs de finition au dessus et en dessous de l'empilement, on a protègé le condensateur et ceci pour différentes raisons. Ces couches terminales inférieures et supérieures isolent électriquement le condensateur. Cette isolation est importante pour les condensateurs "nus" ou de type "chip film" qui ne sont pas encapsulés dans un boîtier et ne présentent pas de connection. Ces condensateurs sont montés en surface de circuits imprimés. En l'absence de couches inactives, la couche inférieure de l'empilement peut être en contact électrique avec deux pistes distinctes du circuit imprimé, ce qui la rend inutilisable.

Ces tours de finition inactifs servent aussi à protéger mécaniquement le condensateur et même à maintenir les couches de l'empilement.

Sur la figure 2b, les deux films 1,2 de la paire sont positionnés juste avant d'être bobinés sur la roue de grand diamètre. Dans la zone e de la figure 2b, les deux films 1,2 ont une disposition habituelle. Cette disposition correspond à celle employée pour faire les couches actives. Le film 1 correspond, par exemple, à la couche n-2 et le film 2 correspond par exemple à la couche n-3. Les marges 12,22 sont sur des côtés opposés.

Dans la zone b médiane, on a vrillé le film 1 sur lui-même, à 180°, pendant le bobinage, dans un premier sens. Cette zone b forme une vrille.

Dans la zone d, on a représenté la disposition des deux films 1,2 après le vrillage. Cette situation correspond aux couches n et n-1 du condensateur de la figure 2a. Les marges 12 et 22 sont du même côté et les métallisations 11 et 21 sont en contact, face à face. La paire de films après vrillage forme des couches inactives. Pour revenir à la position initiale représentée dans la zone e, il suffit de vriller le même film 1, à 180 °. De préférence, on le vrillera dans un second sens inverse au premier sens. De nouveau les marges des films de la paire seront sur des côtés opposés.

Dans la zone b, l'un des films 1 est vrillé et l'élément capacitif formé par la superposition des deux films 1,2 est mis en court circuit; cela crée un défaut. Un condensateur découpé dans le ruban capacitif comportera ce défaut. Ce défaut bien que normalement nuisible pour la réalisation d'un bon condensateur peut être éliminé, si l'on fait subir au condensateur un traitement électrique visant à l'autocicatrisation.

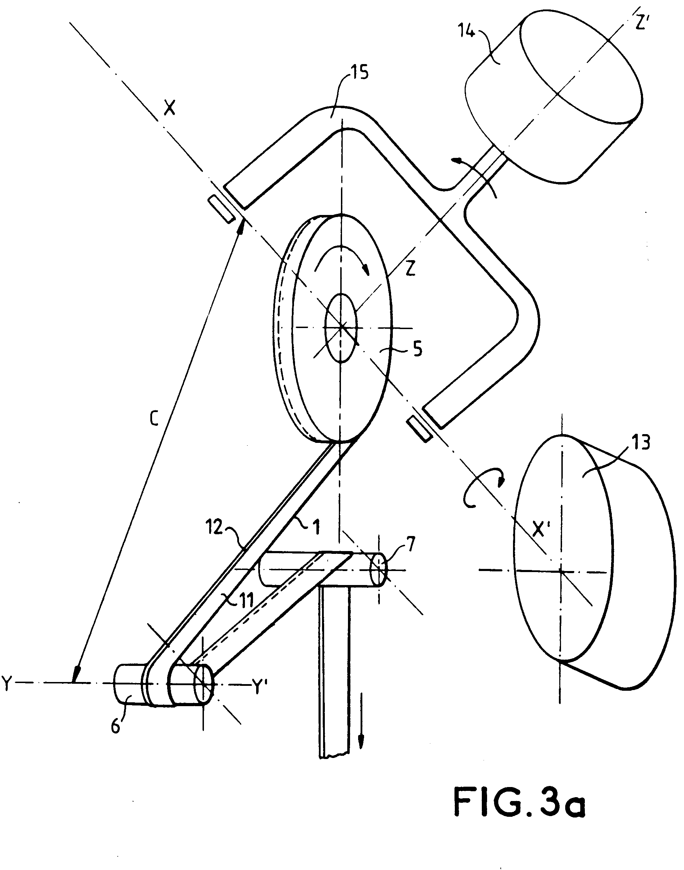

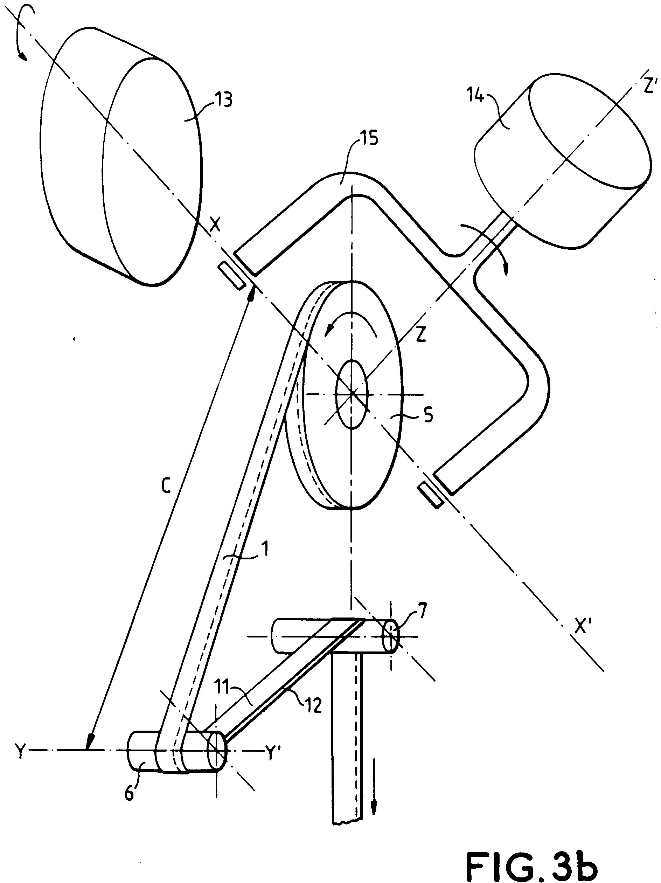

Les figures 3a et 3b représentent une vue schématique partielle d'une machine de bobinage respectivement avant le vrillage et après. On n'a représenté qu'un seul film 1 de la paire, celui qui sera vrillé. Le film 1 est issu d'une galette 5 en rotation autour d'un axe XX'. Un premier moteur 13 entraîne la galette 5. Le sens de rotation est mentionné. Le film 1 est ensuite guidé par un premier galet 6 en rotation autour d'un axe YY', puis par un second galet 7. En aval du second galet 7 il sera superposé à l'autre film de la paire (non représenté) puis enroulé sur la roue de grand diamètre (non représentée) ou sur un mandrin (non représenté).

Un second moteur 14 entraîne en rotation autour d'un axe ZZ', sur 180°, l'ensemble galette 5-premier moteur 13. Il est utilisé pour faire basculer la galette 5. L'axe ZZ' est normal à l'axe XX' de la galette 5. Il passe par le centre de la galette 5 et est dirigé sensiblement parallèlement au film 1 qui se déroule. Pour cela on a utilisé un dispositif 15 en forme de Y dont le pied est relié à l'arbre de sortie du second moteur 14 et dont les deux branches sont reliées à l'axe XX' de part et d'autre de la galette 5.

Le basculement de la galette 5 a eu lieu sur la figure 3b. Ce basculement, en cours de bobinage, provoque une vrille dans le film 1. Le film 1 a été vrillé en amont du premier galet 6 et la vrille qui s'est formée, s'est déplacée le long du film en aval du second galet 7 jusqu'à la roue de grand diamètre. Pour que le déplacement de la vrille puisse avoir lieu, il suffit que la distance c séparant l'axe XX' de la galette 5 de l'axe YY' du premier galet 6 soit suffisamment petite. Dans ce cas, la contrainte liée au vrillage est supérieure à l'adhérence du film sur le premier galet 6. La distance c est, par exemple, inférieure à 100 mm si le film 1 a une largeur de 4,5 mm. Cette distance c est proportionnelle à la largeur du film. On aura intérêt à utiliser un dispositif qui permet d'éloigner ou de rapprocher l'axe YY' du premier galet 6 de l'axe XX' de la galette 5 pour régler la distance c en fonction de la largeur du film.

Au contraire, si la distance c est très grande, la vrille qui se forme après le basculement de la galette 5 ne franchit pas le premier galet 6. Aucun film n'est vrillé sur la roue de grand diamètre. La contrainte liée au vrillage est moins importante que l'adhérence du film sur le premier galet 6.

Les sens de rotation sont mentionnés sur les galettes 5. Après le basculement de la galette 5, le film 1 circule dans le même sens sur les galets 6,7 mais le sens de rotation de la galette 5 s'est inversé. Le basculement a entrainé une inversion du sens de rotation de la galette 5.

Sur la figure 3a, la zone métallisé 11 du film 1 est en contact avec le second galet 7 et la marge latérale 12 est à gauche, sur la figure 3b la zone métallisée 11 n'est plus en contact avec le second galet 7 et la marge est à droite.

Lorsque l'on réalise des condensateurs empilés par enroulement sur une roue de grand diamètre il est fréquent de bobiner la paire de films sur environ 1000 tours pour faire un premier ruban capacitif. Ensuite, on insère un clinquant et on recommence l'opération de bobinage pour faire un autre ruban capacitif.

Avec le procédé conforme à l'invention, on commencera par réaliser quelques tours inactifs après avoir vrillé l'un des films à 180°, dans un premier sens pour que leurs marges soient du même côté, on attaquera ensuite les tours actifs en vrillant le même film à 180 ° dans un second sens, opposé au premier sens. On terminera le ruban capacitif avec quelques tours inactifs en vrillant de nouveau à 180° le même film dans le premier sens. On insère le clinquant et on recommence l'opération de bobinage en commençant par quelques tours inactifs pour réaliser un second ruban capacitif.

Le procédé selon l'invention, bien qu'utilisant comme matière inactive des films métallisés en eux même coûteux, voit tout son interêt à cause du bobinage en continu à la fois des zones actives et non actives, sans rupture volontaire des films.

## Revendications

**1 -** Condensateur de type empilé ou bobiné, réalisé par superposition d'au moins une paire de films (1,2) diélectriques présentant sur une seule de leurs faces une zone métallisée (11,21) et une marge latérale (12,22) non métallisée, de manière à former des couches, le condensateur comportant des couches actives (n-2, n-3) capacitivement lorsque les marges (12,22) des deux films (1,2) de la paire sont sur des côtés opposés et des couches inactives (n, n-1) capacitivement, caractérisé en ce que les marges (12,22) des deux films de la paire sont du même côté, au niveau des couches inactives.

**2 -** Condensateur selon la revendication 1, caractérisé en ce que les couches inactives capacitivement sont des couches terminales du condensateur.

**3 -** Procédé de fabrication d'un condensateur selon l'une des revendications 1 ou 2, caractérisé en ce qu'il consiste à bobiner au moins une paire de films diélectriques (10,20) superposés, positionnés de manière à ce que leurs marges (12,22) soient sur des côtés opposés, pour réaliser les couches actives capacitivement et, au cours du bobinage à vriller l'un des films, sur lui-même, à 180° par rapport à la position qu'il a lors du bobinage des couches actives, pour réaliser les couches inactives capacitivement.

**4 -** Procédé de fabrication selon la revendication 3, chaque film (1) étant issu d'une galette (5) en rotation autour d'un axe, puis étant guidé par un galet (6) en rotation autour d'un axe, caractérisé en ce que le vrillage est réalisé en amont du galet (6) de manière à provoquer une vrille entre le galet (6) et la galette (5).

**5 -** Procédé de fabrication selon la revendication 4, caractérisé en ce que la distance (c) séparant l'axe de rotation de la galette (5) de l'axe de rotation du galet (6) est suffisament petite pour que la vrille suive le film et se déplace en aval du galet (6).

**6 -** Procédé de fabrication d'un condensateur selon l'une des revendications 4 ou 5, caractérisé en ce qu'un dispositif est prévu pour modifier la distance séparant l'axe de rotation de la galette (5) de l'axe de rotation du galet (6).

**7 -** Procédé de fabrication d'un condensateur selon l'une des revendications 4 à 6, caractérisé en ce que le vrillage est obtenu en faisant basculer une des galettes (5) à 180° de manière à inverser son sens de rotation.

**8 -** Procédé de fabrication d'un condensateur selon l'une des revendications 3 à 7, caractérisé en ce que, dans le cas d'un condensateur empilé, les films de la paire sont bobinés sur une roue de grand diamètre pour obtenir un condensateur-mère.

**9 -** Procédé de fabrication d'un condensateur selon l'une des revendications 3 à 7, caractérisé en ce que, dans le cas d'un condensateur bobiné, les films de la paire sont bobinés sur un mandrin pour obtenir un condensateur individuel.
